# EUROPEAN PATENT APPLICATION

(11) **EP 3 893 569 A1**
(43) Date of publication of application: **13.10.2021**
(21) Application number: 19892149.6
(22) Date of filing: 27.11.2019
(51) Int. Cl.: H04W 72/04, H04W 56/00

(54) **METHOD EXECUTED BY USER EQUIPMENT AND USER EQUIPMENT**

(30) Priority: 06.12.2018 CN 201811491037
(71) Applicant: Sharp Kabushiki Kaisha, Sakai-shi Osaka 590-8522 (JP)
(72) Inventor: CHANG, Ningjuan, Shanghai 201206 (CN); LIU, Renmao, Shanghai 201206 (CN)
(74) Representative: Müller Hoffmann & Partner
(86) International application number: PCT/CN2019/121269
(87) International publication number: WO 2020/114289

(57) **Abstract**

Provided in the present disclosure are a method performed by user equipment and user equipment, the method comprising: UE entering an RRC idle state and enabling pre-configured uplink resource (PUR) transmission; the UE determining a configuration value of an idle time alignment timer (TAT) as a TAT for PUR transmission; and the UE starting or restarting the idle TAT according to the configuration value.

## Description

### TECHNICAL FIELD

The present disclosure relates to the technical field of wireless communications. More specifically, the present disclosure relates to a method performed by user equipment and user equipment.

### BACKGROUND

In June 2018, a new work item on Release 16 of the further enhancement for the Narrow Band Internet of Things (NB-IoT) Project (see RP-181451: New WID on R16 enhancement for NB-IoT) and a new work item on Release 16 of the further enhancement for Machine Type Communication (MTC) (see RP-181878, Revised WID for additional MTC) enhancement) were approved at the 3rd Generation Partnership Project (3GPP) RAN#80 plenary meeting. One of the goals of these two research projects is to improve the efficiency of uplink transmission to reduce the power consumption of User Equipment (UE).

In the prior art, if UE in an idle state intends to transmit uplink data, there are two modes: one mode is to enter an RRC connected state through Radio Resource Control (RRC) connection establishment/recovery procedure, i.e., transmits the uplink data in the RRC connected state in which connection is established with a network side; the other mode is to employ an Early Data Transmission (EDT) mechanism introduced in Release 15, i.e., transmits small data packets to a base station together in a third message in a random access procedure. For small data packets, using the EDT mode can obviously reduce signaling overheads and consume less UE power than entering the RRC connected state first and then transmitting uplink data. In the aforementioned Release 16, it is desired to further improve the efficiency of uplink transmission and reduce UE power consumption. In the ongoing technical discussion of improving uplink transmission efficiency to reduce UE power consumption, a feasible method is to pre-allocate available uplink resources for a user in an RRC idle state. When uplink data arrives at the UE, if an uplink of the UE is still in a synchronized state with a network side (that is, there is a valid uplink Time Advance (TA)), uplink transmission can be completed using the pre-allocated uplink resources without requiring to perform uplink transmission through a random access procedure or by entering a connected state through an RRC connection establishment/recovery procedure. If the UE in the idle state determines that the uplink thereof is not in the synchronized state, then the UE may not use the pre-configured uplink resources. In this case, the UE deletes the allocated pre-configured uplink resources and/or releases the corresponding pre-configured uplink resource configuration or considers that the allocated pre-configured uplink resources are invalid. One way for UE to determine whether the uplink is synchronized (i.e., whether the TA is available/valid) is a TA validity timer.

In the present disclosure, the mode in which UE in an RRC idle state transmits uplink data through a pre-configured uplink resource is referred to as a pre-configured/pre-allocated uplink resource (PUR) transmission. The solution proposed in the present disclosure is mainly to address the issue of how to achieve pre-configured uplink resource transmission, and more specifically, to address the issue of configuration and processing of a TA validity timer of pre-configured uplink resources.

### SUMMARY

In order to address at least a portion of the above problems, provided in the present disclosure are a method performed by user equipment and user equipment, which can implement a configuration of a TA validity timer of a pre-configured uplink resource and enables the processing thereof, thereby improving the efficiency of uplink transmission and reducing the energy consumption of the user equipment.

According to the present disclosure, disclosed is a method performed by user equipment (UE), comprising: UE entering an RRC idle state and enabling pre-configured uplink resource (PUR) transmission; the UE determining a configuration value of an idle time alignment timer (TAT) as a TAT for PUR transmission; and the UE starting or restarting the idle TAT according to the configuration value.

In the above method, the idle TAT may be different from a connected TAT used in an RRC connected state or a random access procedure, and in the case in which the idle TAT configuration is included in the PUR transmission configuration acquired from the network side before entering the RRC idle state, the UE may use the value of the idle TAT configuration as the configuration value.

In the above method, in the case in which the idle TAT configuration is not included in the PUR transmission configuration, the UE may use, as the configuration value, the value of a common TAT configuration included in the system information acquired from the network side before entering the RRC idle state.

In the above method, in the case in which the idle TAT configuration is not included in the PUR transmission configuration, the UE may use, as the configuration value, the value of the TAT dedicated configuration acquired from the network side before entering the RRC idle state.

In the above method, in the case in which the idle TAT configuration is not included in the PUR transmission configuration, the UE may determine whether an TAT dedicated configuration acquired from a network side before entering an RRC idle state is stored, and if the TAT dedicated configuration is stored, the UE may use the value of the TAT dedicated configuration as the configuration value, and if the TAT dedicated configuration is not stored, the UE may use, as the configuration value, the value of the common TAT configuration included in the system information acquired from the network side before entering the RRC idle state.

In the above method, the idle TAT may be the same as the connected TAT used in the RRC connected state or the random access procedure, and the UE may use, as the configuration value, the value of the common TAT configuration included in the system information acquired from the network side before entering the RRC idle state.

In the above method, the idle TAT may be the same as the connected TAT used in the RRC connected state or the random access procedure, and in the case in which the TAT dedicated configuration acquired from the network side before entering the RRC idle state is stored, the UE may use the value of the TAT dedicated configuration as the configuration value, and in the case in which the TAT dedicated configuration is not stored, the UE may use, as the configuration value, the value of the common TAT configuration included in the system information acquired from the network side before entering the RRC idle state.

In the above method, the UE may be configured with a plurality of modes of determining the validity of time alignment (TA), including a TAT-based determination mode and other determination modes.

In the above method, the UE may stop the corresponding TAT in the case in which the UE determines the TA is invalid based on other determination modes.

According to the present disclosure, user equipment is provided, including: a processor; and a memory storing instructions, wherein the instructions, when executed by the processor, perform the above method.

### EFFECT OF INVENTION

A method performed by user equipment and user equipment according to the present disclosure can implement a configuration of a TA validity timer of a pre-configured uplink resource and enable the processing thereof, thereby improving the efficiency of uplink transmission and reducing the energy consumption of the user equipment.

### BRIEF DESCRIPTION OF THE DRAWINGS

The above and other features of the present disclosure will become more apparent with the following detailed description in conjunction with the accompanying drawings.
FIG. 1 is a flowchart of a method performed by user equipment according to an embodiment of the present disclosure.
FIG. 2 is a block diagram showing user equipment according to the present disclosure.

### DETAILED DESCRIPTION

According to the following detailed description of exemplary embodiments of the present disclosure made in conjunction with the accompanying drawings, other aspects, advantages, and prominent features of the present disclosure will become apparent to those skilled in the art.

In the present disclosure, the terms "include" and "comprise" and derivatives thereof mean inclusion without limitation; the term "or" may have an inclusive meaning and means "and/or".

In the present specification, the following various embodiments for describing the principles of the present disclosure are merely illustrative and should not be interpreted in any way as limiting the scope of the disclosure. The following description with reference to the accompanying drawings is used to facilitate full understanding of the exemplary embodiments of the present disclosure defined by the claims and equivalents thereof. The following description includes a variety of specific details to facilitate understanding, but these details should be considered merely exemplary. Therefore, those of ordinary skill in the art should recognize that various changes and modifications may be made to the embodiments described herein without departing from the scope and spirit of the present disclosure. In addition, the description of the known function and structure is omitted for clarity and simplicity. In addition, the same reference numerals are used for similar functions and operations throughout the accompanying drawings.

A plurality of embodiments according to the present disclosure are specifically described below by using an NB-IoT in a Long Term Evolution (LTE) mobile communication system and subsequent evolved versions thereof as an exemplary application environment. However, it should be noted that the present disclosure is not limited to the following embodiments, and may be applied to other wireless communication systems such as a machine type communication (MTC) system, and may also be applied to a 5G next-generation wireless communication system (New Radio, NR).

In the present disclosure, a base station may be a base station of any type, including a Node B, an evolved Node B (eNB), a base station gNB in a 5G communication system, a micro base station, a picocell base station, a macro base station, a home base station, etc.; the cell may also be a cell covered by any type of base station described above. In the present disclosure, unless explicitly stated, TA may be time advance or may be time alignment or may be referred to as a TA quantity or a TA value. An RRC idle state may also be an RRC inactive state or an RRC suspended state.

Regarding the above pre-configured uplink resources, there may be two ways: one way is to use dedicated pre-configured uplink resources, that is, dedicated uplink resources are pre-allocated to UE so that uplink data transmission will not cause collisions; the other way is to use shared pre-configured uplink resources, that is, allocated uplink resources are shared by a plurality of UE, which may be a shared resource pool. In this way, the plurality of UE may use one resource for uplink transmission, which may cause conflicts due to potential contention and consequently lead to transmission failures. The conclusion reached at the recent 3GPP meeting is to support the allocation of dedicated pre-configured uplink resources for UE through RRC dedicated signaling, and whether to support the sharing of pre-configured uplink resources has not been determined. The pre-configured uplink resources are uplink resources pre-allocated to UE through an RRC message. The pre-configured uplink resources may be allocated in an RRC connected state for uplink data transmission when UE is in an RRC idle state and/or RRC connected state, or the UE may be notified through system information of the pre-configured uplink resources to be used for uplink data transmission in an RRC idle state.

For dedicated pre-configured uplink resources, the dedicated pre-configured resources might be configured for the UE by a base station through RRC dedicated signaling, such as an RRC connection release message, RRC connection reconfiguration information, an RRC connection establishment message, an RRC connection recovery message, etc., when the UE was previously in an RRC connected state. The UE in an RRC idle state can use the dedicated pre-configured uplink resources to transmit uplink data.

As described in the background, the UE entering the RRC idle state needs to determine that the TA is valid before using the pre-configured uplink resource. Methods for determining TA validity include:
1. The change of serving cells. In other words, if the serving cell in which the UE resides changes, the UE considers that the TA of the PUR acquired through the serving cell is not valid. The change of the serving cell in which the UE resides is usually caused by cell reselection. After the serving cell is changed, an uplink transmission path of the UE may result in invalidity of TA acquired and stored in the serving cell in which the UE originally resides.
2. The change in downlink measurement results of the serving cell. The downlink measurement result herein generally refers to a reference signal received power (RSRP). When the change in the downlink measurement result of the serving cell in which the UE resides has exceeded a threshold value, the UE considers the acquired and stored TAto be invalid.
3. TA validity timer. If the TA validity timer is running, the UE determines that the acquired and stored TA is valid; otherwise, if the TA validity timer is not running or expires, the UE determines that the acquired and stored TA is invalid.

The TA acquired by the UE is acquired by the UE in the RRC connected state before entering the RRC idle state. The UE might obtain TA by means of a TA command in a random access response during a random access procedure in the previous RRC connection establishment or RRC connection duration, or TA can be obtained by means of a TA command, Medium Access Control Element (MAC CE). After the UE enters the RRC idle state, the UE stores the TA used previously in the RRC connected state so as to be used for PUR transmission in the idle state. However, the present disclosure is not limited to such TA acquisition methods. For example, the TA used by the idle UE for PUR transmission may also be a previously (most recently) stored TA or a TA selected from previously stored TAs or obtained by processing.

In the existing mechanism, the UE can only transmit data in an RRC connected state or a random access procedure. The UE also maintains a TA validity timer, referred to as a time alignment timer (TAT), for the obtained TA during these procedures. For the TAT used in the connected state, the value of the TAT is acquired by the UE through a system broadcast (i.e., the information element TimeAlignmentTimerCommon carried in a system information block 2), which is referred to as a common TAT value. However, the base station may also configure a dedicated TAT value (i.e., the information element TimeAlignmentTimerDedicated in the information element MAC-mainconfig) for the UE through a dedicated RRC message such as the RRC connection reconfiguration message, and in this case, the UE will replace the TAT previously received in the system information with the dedicated TAT value.

In the following embodiments of the present disclosure, an implementation method is provided with respect to configuration and operation of a TA validity timer for PUR transmission. For ease of description, the TAT in existing mechanisms is referred to as a connected TAT, and the TA validity timer used for PUR transmission is referred to as an idle TAT or PUR transmission TAT (TAT-PUR for short). The value of the TAT is used to control a time length of uplink synchronization or uplink alignment of a serving cell in which the UE resides that the UE considers, and when used for PUR transmission, the value of the TAT is used to control a time length of uplink synchronization or uplink alignment of a serving cell in which the UE resides for PUR transmission that the UE considers.

In the following embodiments of the present disclosure, indicate/indication and notify/notification or inform/information can be interchanged. UE can refer to NB-IoT UE, Bandwidth-reduced Low-complexity (BL) UE, UE in enhanced coverage, or other UE such as 5G NR UE. In the present disclosure, the PUR may also be referred to as pre-configured uplink grants or pre-allocated uplink resources or pre-allocated uplink grants, etc. Different embodiments can also be combined with each other for operation.

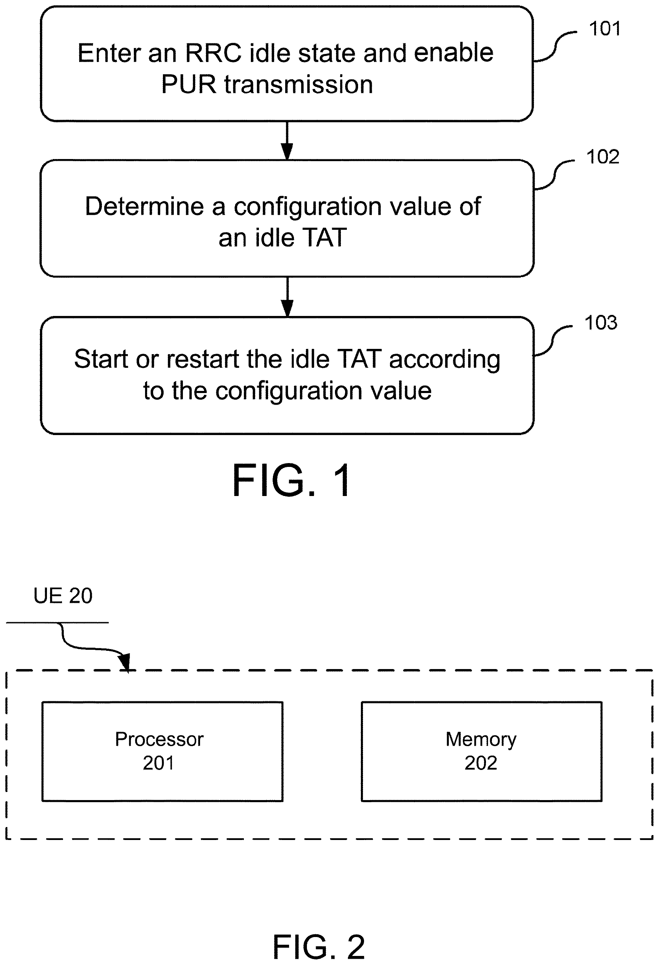

FIG. 1 is a flowchart of a method performed by user equipment according to an embodiment of the present disclosure. In the method, user equipment (UE) performs the configuration of a TAT for PUR transmission.

Specifically, as shown in FIG. 1, the method executed by UE includes step 101, step 102, and step 103. In step 101, UE enters an RRC idle state and enables pre-configured uplink resource (PUR) transmission. In step 102, the UE determines the configuration value of the idle TAT, the idle TAT being a TAT used for PUR transmission. In step 103, the UE starts or restarts the idle state TAT according to the determined configuration value.

In accordance with the above method, the configuration of the TAT for PUR transmission can be achieved, thereby improving the efficiency of uplink transmission and reducing the power consumption of user equipment.

Several embodiments of the present disclosure are described in detail below. In the following embodiments, if the UE is configured with more than one PUR configuration (i.e., corresponding to a plurality of PUR resources), the TAT is used for all configured PUR configurations; or the TAT may be specific to one PUR configuration, that is, one TAT may correspond to one PUR configuration.

### Embodiments of the UE side

### Embodiment 1

Provided in the embodiment is a method for configuring a TAT for PUR transmission, which is performed on UE. Preferably, the idle TAT and the connected TAT are different timers, i.e., the UE maintains two different TATs.

Step 1: UE enters an RRC idle state, and enables PUR transmission.

In this step, the UE entering the RRC idle state may be triggered by receiving the RRC connection release message, or may be caused by the expiration of a data inactive timer, or may also be caused by a failure of a wireless link or re-establishment of an RRC connection, which is not limited in this disclosure. Entering an RRC idle state may also be expressed as leaving an RRC connected state or leaving an RRC active state. The expression "enabling PUR transmission" refers to a condition in which the UE is configured with a PUR and/or the configured PUR is enabled. The enabling may also be triggered after the UE enters the RRC connected state, that is, not triggered by an explicit enabling command. For example, when the UE performs operations of entering the RRC connected state or leaving the RRC connected state, the UE enables PUR transmission and applies the previously received PUR transmission configuration. Preferably, the PUR transmission configuration is carried by the RRC connection release message.

Step 2: The UE determines whether the received PUR transmission configuration includes an idle TAT configuration (for example, represented as an information element TimerAlignmentTimer-PUR or referred to as an information element TimerAlignmentTimer-idle); if so, then the UE applies the value of the included idle TAT configuration; if not, that is, the PUR transmission configuration does not include the idle TAT configuration, then the UE applies the value of the common TAT configuration included in the system information.

Preferably, the common TAT configuration contained in the system information is the information element TimerAlignmentTimerCommon in the aforementioned system information block 2. Alternatively, the common TAT configuration included in the system information is not the aforementioned information element TimerAlignmentTimerCommon in the system information block 2, but another information element TimerAlignmentTimerCommon-PUR configured through system information. In this implementation, the information element TimerAlignmentTimerCommon in the system information block 2 is used primarily for a TAT in the connected state, and a new information element TimerAlignmentTimerCommon-PUR is additionally defined for use in the PUR transmission in the idle state.

Optionally, if the information element TimerAlignmentTimerCommon-PUR in the system information does not exist (i.e., is not configured), then the UE still uses the configuration of the information element TimerAlignmentTimerCommon in the system information block 2.

Step 3: The UE starts the idle TAT.

Optionally, when the UE receives the system information including the information element TimerAlignmentTimerCommon-PUR, the received TimerAlignmentTimerCommon-PUR is not applied. In other words, unlike the transmitted RRC configuration which is immediately applied when received, the information element TimerAlignmentTimerCommon-PUR is not immediately applied when the corresponding system information is received, but is applied when the UE enters the RRC idle state and enables the PUR transmission.

In one implementation, when the idle UE which is configured with/enables the PUR received the TAT configuration included in the system information (for example, when the system information is updated), the TAT configuration included in the received system information is applied. Optionally, the UE applies the TAT configuration that is included in the received system information if the UE does not have a stored TAT dedicated configuration or a TAT configuration is not included in the previously received PUR configuration.

In addition, as described above, there may be a variety of modes of determining the validity of TA by the UE. Therefore, optionally, the execution condition of the step in this embodiment further includes a manner in which a TAT is configured to determine the validity of TA. The manner in which a TAT is configured to determine the validity of TAmay be configured by a display information element (e.g., TA validation:: = SEQUENCE {TAT, serving cell DL RSRP, serving cell change,......}), and may also be implicitly indicated by the configuration of the TAT described above. In one implementation, if the system information includes an information element TimerAlignmentTimerCommon-PUR (or referred to as an information element TimerAlignmentTimerCommon-idle) or the PUR transmission configuration includes an information element TimerAlignmentTimer-PUR (or referred to as an information element TimerAlignmentTimer-idle), the UE considers the TAT is configured to determine the validity of TA.

In accordance with Embodiment 1, the configuration of the TAT for PUR transmission can be achieved, thereby improving the efficiency of uplink transmission and reducing the power consumption of user equipment.

### Embodiment 2

Provided in the embodiment is a method for configuring a TAT for PUR transmission, which is performed on UE. Preferably, the idle TAT and the connected TAT are different timers, i.e., the UE maintains two different TATs.

Step 1: UE enters an RRC idle state, and enables PUR transmission.

Step 1 is the same as step 1 of Embodiment 1, which will not be described herein again.

Step 2: The UE determines whether the received PUR transmission configuration includes an idle TAT configuration (for example, represented as an information element TimerAlignmentTimer-PUR or an information element TimerAlignmentTimer-idle); if so, then the UE applies the value of the included idle TAT configuration; if not, that is, the PUR transmission configuration does not include the idle TAT configuration, then the UE applies the stored TAT dedicated configuration (i.e., the information element TimeAlignmentTimerDedicated in the information element MAC-mainconfig). In another implementation, if the PUR transmission configuration does not include an idle TAT configuration, the UE further determines whether there is a stored TAT dedicated configuration; if so, the UE applies the stored TAT dedicated configuration for PUR transmission, and if not, the UE applies the common TAT configuration included in the system information for PUR transmission.

Preferably, the common TAT configuration contained in the system information is the information element TimerAlignmentTimerCommon in the aforementioned system information block 2. Alternatively, the common TAT configuration included in the system information is not the aforementioned information element TimerAlignmentTimerCommon in the system information block 2, but another information element TimerAlignmentTimerCommon-PUR configured through system information. In this implementation, the information element TimerAlignmentTimerCommon in the system information block 2 is used primarily for a TAT in the connected state, and a new information element TimerAlignmentTimerCommon-PUR is additionally defined for use in the PUR transmission in the idle state.

Optionally, if the information element TimerAlignmentTimerCommon-PUR in the system information does not exist (i.e., is not configured), then the UE still uses the configuration of the information element TimerAlignmentTimerCommon in the system information block 2.

In step 2, the stored TAT dedicated configuration was acquired from a network side in a previous RRC connection procedure when the UE was in an RRC connected state. To be used for the PUR transmission in an idle state, the TAT dedicated configuration needs to be stored when the UE enters the RRC idle state in step 1. Optionally, the stored TAT dedicated configuration may be released when the UE re-enters the RRC connected state, for example, when an RRC connection establishment or RRC connection recovery procedure is initiated or when an RRC connection establishment or RRC connection recovery message is received. Optionally, the stored TAT dedicated configuration may also be released after step 2 or step 3.

Step 3: The UE starts the idle TAT.

In one implementation, when the idle UE which is configured with/enables the PUR received the TAT configuration included in the system information (for example, when the system information is updated), the TAT configuration included in the received system information is applied. Optionally, the UE applies the TAT configuration that is included in the received system information if the UE does not have a stored TAT dedicated configuration or a TAT configuration is not included in the previously received PUR configuration.

In addition, as described above, there may be a variety of modes of determining the validity of TA by the UE. Therefore, optionally, the execution condition of the step in this embodiment further includes a manner in which a TAT is configured to determine the validity of TA. Reference can be made to the description in Embodiment 1 for the manner in which the TAT is configured to determine the validity of TA.

In accordance with Embodiment 2, the configuration of the TAT for PUR transmission can be achieved, thereby improving the efficiency of uplink transmission and reducing the power consumption of user equipment.

### Embodiment 3:

Provided in the embodiment is a method for configuring a TAT for PUR transmission, which is performed on UE. Preferably, the idle TAT and the connected TAT are the same timer, i.e., the UE maintains the same TAT, which is used for data transmission in a connected state and also used for the PUR transmission in an idle state.

Step 1: UE enters an RRC idle state, and enables PUR transmission.

This step is the same as the step described in Embodiment 1, which will not be described herein again.

Step 2: The UE applies the value of a common TAT configuration included in the system information for PUR transmission.

Preferably, the common TAT configuration contained in the system information is the information element TimerAlignmentTimerCommon in the aforementioned system information block 2. Alternatively, the common TAT configuration included in the system information is not the aforementioned information element TimerAlignmentTimerCommon in the system information block 2, but another information element TimerAlignmentTimerCommon-PUR configured through system information. In this implementation, the information element TimerAlignmentTimerCommon in the system information block 2 is used primarily for a TAT in the connected state, and a new information element TimerAlignmentTimerCommon-PUR is additionally defined for use in the PUR transmission in the idle state.

Optionally, if the information element TimerAlignmentTimerCommon-PUR in the system information does not exist (i.e., is not configured), then the UE still uses the configuration of the information element TimerAlignmentTimerCommon in the system information block 2.

In another implementation, in step 2, the UE first determines whether there is a stored TAT dedicated configuration; if so, the UE applies the stored TAT dedicated configuration for PUR transmission, and if not, the UE applies the common TAT configuration included in the system information for PUR transmission.

Reference is made to the description in Embodiment 2 for the stored TAT dedicated configuration.

Step 3: If the TAT is running, the UE restarts the TAT.

Unlike the existing mechanism in which the MAC is reset and the running TAT is stopped when the UE enters the RRC idle state, in this embodiment, considering that the same TAT is used for data transmission in the connected state and PUR transmission in the idle state, when the UE enters the RRC idle state and resets the MAC, if PUR transmission is configured and/or enabled, the running TAT is not stopped, but the TAT is maintained in operation or the TAT is restarted as in step 3.

In addition, as described above, there may be a variety of modes of determining the validity of TA by the UE. Therefore, optionally, the execution condition of the step in this embodiment further includes a manner in which a TAT is configured to determine the validity of TA. Reference can be made to the description in Embodiment 1 for the manner in which the TAT is configured to determine the validity of TA.

In one implementation, the running TAT is stopped when a random access procedure is initiated by an idle UE that enables PUR transmission. The random access procedure may be initiated by RRC, for example, triggered by RRC connection establishment, or may be triggered by the MAC layer itself. For example, after the PUR is invalid, the TA is updated by triggering random access.

In another implementation, when the idle UE which is configured with/enables the PUR received the TAT configuration included in the system information (for example, when the system information is updated), the TAT configuration included in the received system information is applied. Optionally, if the UE does not have a stored TAT dedicated configuration, the UE applies the TAT configuration included in the received system information.

In one implementation, if the UE in the RRC connected state is configured with the PUR configuration for PUR transmission in an idle state, the UE does not release the configured PUR configuration if the TAT expires.

In accordance with Embodiment 3, the configuration of the TAT for PUR transmission can be achieved, thereby improving the efficiency of uplink transmission and reducing the power consumption of user equipment.

### Embodiment 4

Provided in the embodiment is a processing method for a TAT for PUR, which is performed on UE.

As described above, there are a variety of methods of determining the validity of TA, and the base station can configure more than one method of determining the validity of TA for the UE. When more than one TA validity determination method is configured and a TAT-based TA validity determination method is included, the corresponding TAT is stopped if the UE determines that the TA is invalid. The above determination of the UE that the TA is invalid may be based on other non-TAT-based TA validity determination modes. The TA invalidity may also be further expressed as PUR invalidity.

In another implementation, when the UE considers that the PUR is invalid or the UE releases the PUR resource and/or the PUR configuration, the UE MAC stops the TAT. The UE considering the PUR invalid or the UE releasing the PUR resource/configuration may be performed when the UE receives the RRC command from the base station for releasing the PUR resource/configuration.

In accordance with Embodiment 4, the processing of the TAT for PUR transmission can be achieved, thereby improving the efficiency of uplink transmission and reducing the power consumption of user equipment.

FIG. 2 is a block diagram showing user equipment (UE) according to the present disclosure. As shown in FIG. 2, user equipment (UE) 20 includes a processor 201 and a memory 202. The processor 201 may include, for example, a microprocessor, a microcontroller, an embedded processor, etc. The memory 202 may include, for example, a volatile memory (for example, a random access memory (RAM)), a hard disk drive (HDD), a non-volatile memory (for example, a flash memory), or other memories. The memory 202 stores program instructions. The instructions, when executed by the processor 201, can perform the aforementioned method performed by user equipment as described in detail in the present disclosure.

The program running on the device according to the present disclosure may be a program that enables a computer to implement the functions of the embodiments of the present disclosure by controlling a central processing unit (CPU). The program or information processed by the program can be stored temporarily in a volatile memory (e.g., Random Access Memory (RAM)), a Hard Disk Drive (HDD), a non-volatile memory (e.g., flash memory), or other memory systems.

The program for implementing the functions of the embodiments of the present disclosure may be recorded on a computer-readable recording medium. The corresponding functions can be achieved by reading programs recorded on the recording medium and executing these programs by the computer system. The so-called "computer system" may be a computer system embedded in the device, which may include operating systems or hardware (e.g., peripherals). The "computer-readable recording medium" may be a semiconductor recording medium, an optical recording medium, a magnetic recording medium, a short-time dynamic memory program, or any other recording medium readable by a computer.

Various features or functional modules of the device used in the foregoing embodiments may be implemented or executed by circuits (e.g., monolithic or multi-chip integrated circuits). Circuits designed to execute the functions described in this description may include general-purpose processors, Digital Signal Processors (DSPs), Application Specific Integrated Circuits (ASICs), Field Programmable Gate Arrays (FPGAs) or other programmable logic devices, discrete gates or transistor logic, or discrete hardware components, or any combination of the above. The general-purpose processor may be a microprocessor, or may be any existing processor, a controller, a microcontroller, or a state machine. The circuit may be a digital circuit or an analog circuit. When new integrated circuit technologies that replace existing integrated circuits emerge because of the advances in semiconductor technology, one or a plurality of embodiments of the present disclosure may also be implemented using these new integrated circuit technologies.

Furthermore, the present disclosure is not limited to the embodiments described above. Although various examples of the described embodiments have been described, the present disclosure is not limited thereto. Fixed or non-mobile electronic devices mounted indoors or outdoors, such as AV equipment, kitchen equipment, cleaning equipment, air conditioner, office equipment, vending machines, and other household appliances, may be used as terminal devices or communications devices.

The embodiments of the present disclosure have been described in detail above with reference to the accompanying drawings. However, the specific structures are not limited to the above embodiments. The present disclosure also includes any design modifications that do not depart from the substance of the present disclosure. In addition, various modifications may be made to the present disclosure within the scope of the claims. Embodiments resulted from the appropriate combinations of the technical means disclosed in different embodiments are also included within the technical scope of the present disclosure. In addition, components with the same effect described in the above embodiments may be replaced with one another.

## Claims

1. A method performed by user equipment (UE), comprising:
UE entering an RRC idle state and enabling pre-configured uplink resource (PUR) transmission;
the UE determining a configuration value of an idle time alignment timer (TAT) as a TAT for PUR transmission; and
the UE starting or restarting the idle TAT according to the configuration value.

2. The method according to claim 1, wherein
the idle TAT is different from a connected TAT used in an RRC connected state or a random access procedure, and
in the case in which an idle TAT configuration is included in a PUR transmission configuration acquired from a network side before the UE enters the RRC idle state, the UE uses the value of the idle TAT configuration as the configuration value.

3. The method according to claim 2, wherein
in the case in which the idle TAT configuration is not included in the PUR transmission configuration, the UE uses, as the configuration value, the value of a common TAT configuration included in system information acquired from the network side before entering the RRC idle state.

4. The method according to claim 2, wherein
in the case in which the idle TAT configuration is not included in the PUR transmission configuration, the UE uses, as the configuration value, the value of a TAT dedicated configuration acquired from the network side before entering the RRC idle state.

5. The method according to claim 2, wherein
in the case in which the idle TAT configuration is not included in the PUR transmission configuration, the UE determines whether a TAT dedicated configuration acquired from the network side before entering the RRC idle state is stored,
if the TAT dedicated configuration is stored, the UE uses the value of the TAT dedicated configuration as the configuration value, and if the TAT dedicated configuration is not stored, the UE uses, as the configuration value, the value of a common TAT configuration included in system information acquired from the network side before entering the RRC idle state.

6. The method according to claim 1, wherein
the idle TAT is the same as a connected TAT used in an RRC connected state or a random access procedure, and
the UE uses, as the configuration value, the value of a common TAT configuration included in system information acquired from the network side before entering the RRC idle state.

7. The method according to claim 1, wherein
the idle TAT is the same as a connected TAT used in an RRC connected state or a random access procedure, and
if a TAT dedicated configuration acquired from a network side before entering the RRC idle state is stored, the UE uses the value of the TAT dedicated configuration as the configuration value, and if the TAT dedicated configuration is not stored, the UE uses, as the configuration value, the value of a common TAT configuration included in system information acquired from the network side before entering the RRC idle state.

8. The method according to claim 1, wherein
the UE is configured with a plurality of modes of determining the validity of time alignment (TA), comprising a TAT-based determination mode and other determination modes.

9. The method according to claim 8, wherein
the UE stops the corresponding TAT if the TA is determined to be invalid based on other determination modes.

10. User equipment, comprising:
a processor; and
a memory storing instructions;
wherein the instructions, when executed by the processor, perform the method according to any one of claims 1 to 9.
